# EUROPÄISCHE PATENTSCHRIFT

(11) **EP 3 546 782 B1**
(45) Veröffentlichungstag und Bekanntmachung des Hinweises auf die Patenterteilung: **09.12.2020**
(21) Anmeldenummer: 19164311.3
(22) Anmeldetag: 21.03.2019
(51) Int. Cl.: F16D 25/08

(54) **DOPPELAKTOR, BEISPIELSWEISE FÜR EIN DOPPELKUPPLUNGSGETRIEBE**
DOUBLE ACTUATOR, FOR EXAMPLE FOR A DUAL CLUTCH TRANSMISSION
ACTIONNEUR DOUBLE, PAR EXEMPLE, POUR UNE TRANSMISSION À DOUBLE EMBRAYAGE

(30) Priorität: 31.03.2018 DE 102018002670
(43) Veröffentlichungstag der Anmeldung: 02.10.2019
(73) Patentinhaber: WABCO GmbH, 30453 Hannover (DE)
(72) Erfinder: SCHULZ, Tobias, 30982 Pattensen (DE)
(74) Vertreter: Copi, Joachim

(56) Entgegenhaltungen:
- WO-A2-2011/042004
- DE-A1-102014 203 514
- DE-A1-102015 214 981
- US-A1- 2014 084 905

## Beschreibung

Die Erfindung betrifft einen Doppelaktor, beispielsweise für ein Doppelkupplungsgetriebe, mit einem hohlzylindrischen radial äußeren Kolben und einem hohlzylindrischen radial inneren Kolben, bei dem der innere Kolben abschnittsweise koaxial von dem äußeren Kolben umschlossen ist, bei dem der innere Kolben und der äußere Kolben in einem Zylindergehäuse parallel zu dessen Längsmittelachse axial verschiebbar geführt sind, und bei dem das Zylindergehäuse einen radial inneren Zylinderabschnitt sowie einen diesen koaxial umschließenden radial mittleren Zylinderabschnitt aufweist.

In Kraftfahrzeugen finden zunehmend Doppelkupplungsgetriebe Verwendung, um schnelle, vorausschauende und kraftflussunterbrechungsfreie Gangwechsel in Abhängigkeit vom jeweiligen Fahrzustand des Kraftfahrzeugs zu ermöglichen. Außerdem sind nur ein Teilgetriebe aufweisende automatisierte Schaltgetriebe bekannt. Derartige Getriebe ermöglichen bei einer entsprechenden Gangzahl eine optimale Anpassung des aktuellen Betriebszustands der Brennkraftmaschine an die jeweilige Fahrsituation des Kraftfahrzeugs. Ein für klassische Automatikgetriebe erforderlicher hydraulischer Drehmomentwandler ist bei Doppelkupplungsgetrieben oder automatisierten Schaltgetrieben entbehrlich, woraus ein beträchtliches Kraftstoffeinsparungspotential resultiert. Die Aktoren zur Steuerung derartiger Doppelkopplungsgetriebe oder automatisierter Schaltgetriebe können beispielsweise elektromechanisch, hydraulisch oder pneumatisch betätigbar sein.

DE 10 2014 203514 betrifft eine Betätigungseinrichtung für eine Kupplung zur Übertragung von Drehmoment von einer Eingangswelle auf mindestens eine Ausgangswelle. Die Kupplung aufweist mindestens eine Teilkupplung zur lösbaren Verbindung der Eingangswelle und eine Ausgangswelle. Die Betätigungseinrichtung umfasst mindestens einen hydraulischen Zylinder zur Betätigung einer Kupplung, wobei der hydraulische Zylinder ein Gehäuse und einen in einer Betätigungsrichtung verschiebbaren Kolben aufweist, wobei Gehäuse und Kolben einen Druckraum definieren, in den durch mindestens eine Zuleitung im Gehäuse ein Hydraulikmedium zu- und abgeführt werden kann, wobei der Druckraum durch mindestens eine Dichtung zwischen Kolben und Gehäuse abgedichtet ist, die relativ zum Gehäuse ortsfest anliegt, wobei der Kolben relativ zur Dichtung in der Betätigungsrichtung beweglich ist.

DE 10 2015 214981 betrifft ein Betätigungssystem für eine Kupplung eines Kraftfahrzeugs, etwa einer Kraftfahrzeugeinzel- oder -doppelkupplung, mit wenigstens einem relativ zu wenigstens einem Zylinder axial verfahrbar gelagerten Kolben, wobei zwischen dem Kolben und dem Zylinder ein zur Hydraulikfluidaufnahme vorbereiteter Druckraum vorhanden ist.

WO 2011/042004 betrifft eine Sensoranordnung zur Detektion der Bewegung/Position zweier nahe beieinander oder ineinander liegender bzw. angeordneter, relativ zueinander beweglicher Bauteile einer Baugruppe.

US 2014/084905 A1 bezieht sich auf ein Verfahren zum Bereitstellen der robusten Messung einer linearen Position in Kraftfahrzeuganwendungen und insbesondere auf ein Verfahren zum Bereitstellen der robusten Messung einer linearen Position in Kraftfahrzeuggetriebeanwendungen unter Verwendung eines Magnetfeldsensors zum Detektieren der Stärke eines Hintergrundmagnetfelds

Zum Betrieb eines Doppelkupplungsgetriebes oder eines automatisierten Schaltgetriebes sind geeignete Sensoren notwendig, um die exakten Positionen der mit Hilfe der Aktoren betätigten Getriebe- und Kupplungselemente zur Auswertung durch eine elektronische Steuer- und/oder Regeleinrichtung zu erfassen. Zur präzisen und robusten Messung der Position eines Getriebe- oder Kupplungselements entlang eines linearen Verfahrweges kommen beispielsweise aus dem Stand der Technik be-kannte PLCD-Sensoren (Permanentmagnetic Linear Contactless Displacement) in Betracht. Solche Sensoren ermöglichen eine präzise, kontinuierliche und dabei wartungsfreie, da berührungslose Erfassung von Stellwegpositionen eines Bauteils auch unter widrigen Umgebungseinflüssen, wie sie beispielsweise in einem Motor oder Getriebe vorherrschen. Die genannten Positionserfassungssensoren müssen an geeigneten Stellen in oder an den jeweiligen Aktoren angeordnet und verkabelt werden, welches mit einem gewissen Montageaufwand verbunden ist.

Der Erfindung lag die Aufgabe zugrunde, einen axial wirksamen Doppelaktor vorzustellen, beispielsweise für ein Doppelkupplungsgetriebe oder ein automatisiertes Schaltgetriebe, der eine räumlich möglichst kompakte Sensorik zur Positionserfassung der Stellglieder des Doppelaktors beziehungsweise der von diesem zu betätigenden Getriebe- und Kupplungselemente aufweist.

Die Lösung dieser Aufgabe wird mit einem die Merkmale des Anspruchs 1 aufweisenden Doppelaktor erreicht. Vorteilhafte Weiterbildungen sind in den abhängigen Ansprüchen genannt.

Die Erfindung betrifft demnach einen Doppelaktor, beispielsweise für ein Doppelkupplungsgetriebe, mit einem hohlzylindrischen radial äußeren Kolben und einem hohlzylindrischen radial inneren Kolben, bei dem der innere Kolben abschnittsweise koaxial von dem äußeren Kolben umschlossen ist, bei dem der innere Kolben und der äußere Kolben in einem Zylindergehäuse parallel zu dessen Längsmittelachse axial verschiebbar geführt sind, und bei dem das Zylindergehäuse einen radial inneren Zylinderabschnitt sowie einen diesen koaxial umschließenden radial mittleren Zylinderabschnitt aufweist.

Um bei diesem Doppelaktor den Platzbedarf und den Montageaufwand für die Anordnung und Verkabelung seiner Positionssensoren so gering wie möglich zu halten ist vorgesehen, dass an dem mittleren Zylinderabschnitt des Zylindergehäuses eine Sensoreinrichtung angeordnet ist, in welcher ein erster Wegsensor und ein zweiter Wegsensor axial nebeneinander integriert sind, und dass diese Wegsensoren derartig ausgebildet und angeordnet sind, dass eine Axialposition des äußeren Kolbens sowie eine Axialposition des inneren Kolbens in Bezug zu dem mittleren Zylinderabschnitt jeweils unabhängig voneinander und berührungslos messbar sind.

Durch die bauliche Zusammenfassung der Wegsensoren ergibt sich ein reduzierter Einbauplatzbedarf für diese Wegsensoren sowie ein verringerter Montage und Verkabelungsaufwand. Vorzugsweise sind die beiden Wegsensoren dabei in einem gemeinsamen Gehäuse der Sensoreinrichtung untergebracht.

Gemäß einer vorteilhaften Ausgestaltung des Doppelaktors ist vorgesehen, dass der äußere Kolben einen durchmesserkleineren Abschnitt sowie einen durchmessergrößeren Abschnitt aufweist, wobei zwischen dem durchmesserkleineren Abschnitt und dem durchmessergrößeren Abschnitt eine radial auswärts gerichtete Schulter ausgebildet ist. Aufgrund der gestuften Geometrie des radial äußeren Kolbens unter Ausbildung einer Schulter baut dieser Doppelaktor abschnittweise radial vergleichsweise klein, so dass dieser auch bei geringen Platzverhältnissen problemlos nutzbar ist.

Bei einer anderen vorteilhaften Ausgestaltung dieses Doppelaktors ist vorgesehen, dass an dem durchmessergrößeren Abschnitt des radial äußeren Kolbens ein erster Magnet angeordnet ist, der mit dem ersten Wegsensor zusammenwirkt. Infolgedessen ist eine mechanisch robuste, verschleißfreie und zugleich äußerst präzise lineare Wegmessung am radial äußeren Kolben möglich.

Weiter ist bevorzugt vorgesehen, dass der radial innere Kolben einen radial auswärts gerichteten, umlaufenden Vorsprung aufweist, in oder an dem ein zweiter Magnet angeordnet ist, der mit dem zweiten Wegsensor zusammenwirkt. Hierdurch ist eine mechanisch robuste, verschleißfreie sowie zugleich präzise lineare Wegmessung auch des inneren Kolbens gegeben. Die beiden Magneten sind vorzugsweise rechtwinklig in Bezug zueinander angeordnet.

Bevorzugt ist der erste Magnet ein Ringmagnet oder er ist aus Segmentmagneten gebildet. Der Einsatz eines Ringmagneten macht eine Verdrehsicherung beziehungsweise ein so genanntes "Twist-Lock" des äußeren Kolbens entbehrlich. Ein Segmentmagnet ermöglicht hingegen einen kompakteren Aufbau, erfordert jedoch die Verdrehsicherung des äußeren Kolbens zur Gewährleistung einer unter allen Umständen verlässlichen Signalerzeugung. Sowohl der Ringmagnet als auch die Segmentmagnete sind als gesinterte Permanentmagnete mit einem Werkstoff aus der Gruppe der seltenen Erden gebildet. Sowohl der Ringmagnet als auch der Segmentmagnet weisen zur Gewährleistung einer verlässlichen Signalerzeugung eine möglichst hohe magnetische Flussdichte beziehungsweise Feldstärke auf.

Vorzugsweise ist der zweite Magnet ein Ringmagnet oder er ist aus Segmentmagneten gebildet. Durch den alternativen Einsatz eines Ringmagneten oder eines Segmentmagneten ist eine optimale Anpassbarkeit der Sensorik des Doppelaktors an unterschiedliche konstruktive Platzvorgaben in oder an einem Kraftfahrzeuggetriebe mit üblicherweise begrenzten Einbauräumen gegeben.

Weiter ist bei dem Doppelaktor bevorzugt vorgesehen, dass der innere Zylinderabschnitt und der mittlere Zylinderabschnitt zusammen mit einem Basisabschnitt des Zylindergehäuses und dem inneren Kolben einen ersten Druckraum begrenzen, wobei axial zwischen dem radialen Vorsprung des inneren Kolbens und dem Basisabschnitt des Zylindergehäuses ein erstes Federelement angeordnet ist. Durch das bei Druckbeaufschlagung des ersten Druckraumes mit einem Fluid vorzugsweise expandierte erste Federelement kann der innere Kolben mittels Federkraft in seine drucklose Ausgangsposition zurückkehren. Das erste Federelement dazu bevorzugt als eine expandierbare zylindrische Zugfeder realisiert.

Gemäß einer weiteren Ausgestaltung ist vorgesehen, dass der durchmessergrößere Abschnitt des äußeren Kolbens koaxial von einer radial gestuften Zylindermanschette umfasst ist, deren erster Endabschnitt fest mit dem Basisabschnitt des Zylindergehäuses verbunden ist, und dessen von dem ersten Endabschnitt weggerichteter freier zweiter Endabschnitt mit wenigstens einem Dichtelement gegenüber einer radialen Außenfläche des durchmessergrößeren Abschnitts des äußeren Kolbens abgedichtet ist. Hierdurch ist eine zuverlässige axiale Führung des äußeren Kolbens sowie Abdichtung des ersten Druckraumes gewährleistet.

Eine andere Weiterbildung des Doppelaktors sieht vor, dass der durchmessergrößere Abschnitt des äußeren Kolbens an seinem druckraumseitigen freien axialen Ende einen radial auswärts gerichteten Fußabschnitt aufweist, der mittels mindestens eines Dichtelements gegenüber der gestuften Zylindermanschette abgedichtet ist, und dass der durchmessergrößere Abschnitt des äußeren Kolbens mittels mindestens eines Führungselements an der radialen Außenseite des mittleren Zylinderabschnitts axial verschiebbar geführt ist. Infolgedessen ist eine zuverlässige Abdichtung und Führung des radial äußeren Kolbens gegeben.

Hierbei ist bevorzugt vorgesehen, dass zwischen dem Fußabschnitt des äußeren Kolbens, dem durchmessergrößeren Abschnitt des äußeren Kolbens sowie der gestuften Zylindermanschette ein zweiter Druckraum ausgebildet ist. Hierdurch ist ein zweiter Druckraum zur Gewährleistung einer von dem inneren Kolben unabhängigen Betätigung des äußeren Kolbens durch eine Druckbeaufschlagung mit einem geeigneten Fluid definiert.

Vorzugsweise ist axial zwischen einer ersten radialen Schulter der gestuften Zylindermanschette und dem Fußabschnitt des äußeren Kolbens ein zweites Federelement angeordnet. Hierdurch kann der radial äußere Kolben bei fehlender Druckbeaufschlagung des zweiten Druckraumes mit dem Fluid mittels Federkraft in seine drucklose Ausgangsposition zurückkehren. Auch das zweite Federelement ist dazu bevorzugt als eine zylindrische Zugfeder ausgebildet.

Gemäß einer technisch vorteilhaften Ausgestaltung bildet eine zweite radiale Schulter der gestuften Zylindermanschette einen axialen Anschlag für den Fußabschnitt des äußeren Kolbens. Hierdurch ergibt sich ein definierter, maximaler axialer Verfahrweg des radial äußeren Kolbens. Im Ergebnis kann der äußere Kolben genau zwei definierte endseitige Axialstellungen einnehmen.

Außerdem kann vorgesehen sein, dass an einem freien axialen Endabschnitt des radial mittleren Zylinderabschnitts ein Anschlagelement befestigt ist, an das sich der radiale Vorsprung des inneren Kolbens anlegen kann. Hierdurch ein maximaler axialer Verfahrweg des radial inneren Kolbens vorgegeben, der damit gleichfalls zwei definierte endseitige Axialstellungen einnehmen kann.

Vorzugsweise sind beide Wegsensoren jeweils nach Art eines PLCD-Sensors ausgebildet. Hierdurch ist eine robuste, berührungslose, wartungsfreie sowie stetiglineare Stellpositionserfassung beider Kolben des Doppelaktors mit einer hohen Auflösung und Genauigkeit möglich. Die Stellpositionserfassung beider Kolben ist hierbei aufgrund der Doppelsensorik unabhängig voneinander.

Zum besseren Verständnis der Erfindung ist der Beschreibung eine Zeichnung eines Ausführungsbeispiels beigefügt. Die einzige Figur zeigt in einem schematischen Teillängsschnitt einen die Merkmale der Erfindung aufweisenden Doppelaktor.

Der Doppelaktor 10 kann dazu genutzt werden, in einem nicht dargestellten Doppelkupplungsgetriebe Getriebeelemente axial hin und her zu bewegen, um so Getriebegänge ein- und auszulegen. Der Doppelaktor 10 weist einen hohlzylindrischen radial äußeren Kolben 12 und einen hohlzylindrischen radial inneren Kolben 14 auf, welche nachfolgend als äußerer Kolben 12 und innerer Kolben 14 bezeichnet werden. Der innere Kolben 14 ist abschnittsweise koaxial von dem äußeren Kolben 12 umgeben. Sowohl der äußere Kolben 12 als auch der innere Kolben 14 sind in einem Zylindergehäuse 16 parallel zu dessen Längsmittelachse 18 axial verschiebbar aufgenommen.

Das Zylindergehäuse 16 weist einen radial inneren Zylinderabschnitt 20 sowie einen radial mittleren Zylinderabschnitt 22 auf. Radial außen ist an den Zylindergehäuse 16 eine radial gestufte Zylindermanschette 58 angeordnet, welche nach dem Montieren des äußeren Kolbens 12 mit dem Zylindergehäuse 16 fest verbunden wurde. Im weiteren Verlauf der Beschreibung werden der radial innere Zylinderabschnitt 20 vereinfacht als innerer Zylinderabschnitt 20 und der radial mittlere Zylinderabschnitt 22 als mittlerer Zylinderabschnitt 22 bezeichnet.

Erfindungsgemäß ist am oder im mittleren Zylinderabschnitt 22 eine zentrale Sensoreinrichtung 30 angeordnet, in welche ein erster Wegsensor 32 und ein zweiter Wegsensor 34 integriert sind. Mit Hilfe der beiden linear und stetig arbeitenden Wegsensoren 30, 32 sind eine Axialposition des äußeren Kolbens 12 und eine Axialposition des inneren Kolbens 14 in Bezug zu dem mittleren Zylinderabschnitt 22 des Zylindergehäuses 16 unabhängig voneinander sowie berührungslos messbar.

Der äußere Kolben 12 verfügt über einen durchmesserkleineren Abschnitt 40 und einen durchmessergrößeren Abschnitt 42, zwischen denen eine radial auswärts orientierte, das heißt senkrecht zur Längsmittelachse 18 verlaufende Schulter 44 ausgebildet ist. Im oder am durchmessergrößeren Abschnitt 42 des äußeren Kolbens 12 ist ein erster Magnet M1 integriert, der vorzugsweise mit dem ersten Wegsensor 32 zur Erfassung einer aktuellen axialen Position des äußeren Kolbens 12 in Bezug zu dem mittleren Zylinderabschnitt 22 berührungslos zusammenwirkt.

Der erste Magnet M1 kann zum Beispiel als hohlzylindrischer Ringmagnet oder als Segmentmagnet ausgebildet sein. Im letzteren Fall ist eine Verdrehsicherung zwischen dem äußeren Kolben 12 und dem Zylindergehäuse 16 vorzusehen, um eine gleichbleibende umfangsseitige Ausrichtung von Magnet M1 und Wegesensor 32 zueinander zu erreichen, so dass unter allen Betriebsbedingungen des Doppelaktors 10 eine verlässliche Weg- bzw. Positionsmessung gewährleistet ist.

Der erste Magnet M1 ist vorzugsweise aus einem permanentmagnetischen Material aus der Gruppe der seltenen Erden beziehungsweise als Permanentmagnet ausgeführt, welcher eine hohe magnetische Flussdichte beziehungsweise eine hohe magnetischen Feldstärke aufweist.

Durch den Einsatz eines Segmentmagneten kann ein baulich kompakterer Aufbau erreicht werden, wobei sich zugleich die Menge des erforderlichen permanentmagnetischen Materials reduzieren lässt. Demgegenüber erlaubt ein Ringmagnet eine von einer etwaigen betriebsbedingten Verdrehung zwischen dem Zylindergehäuse 16 und dem äußeren Kolben 12 unabhängige Wegmessung, so dass eine Verdrehsicherung entbehrlich ist.

Der innere Kolben 14 weist einen radial auswärts gerichteten, scheibenförmigen beziehungsweise flanschartigen Vorsprung 46 auf, der einstückig an dem inneren Kolben 14 ausgebildet ist. Dieser massive Vorsprung 46 verläuft näherungsweise senkrecht zur Längsmittelachse 18. In diesen Vorsprung 46 ist ein zweiter Magnet M2 integriert, der zur axialen Wegmessung des inneren Kolbens 14 mit dem zweiten Wegsensor 34 berührungslos zusammenwirkt.

Ebenso wie der erste Magnet M1 kann auch der zweite Magnet M2 wahlweise als Ringmagnet oder als Segmentmagnet ausgebildet sein. Auch der zweite Magnet M2 ist als bevorzugt gesinterter Permanentmagnet mit einer möglichst hohen magnetischen Flussdichte beziehungsweise magnetischen Feldstärke ausgeführt. Aufgrund dieser magnetischen Eigenschaften der beiden Magnete M1, M2 ist eine hinreichend hohe elektrische Signalstärke der von beiden Wegsensoren 32, 34 gelieferten elektrischen Messsignale sichergestellt. Der durchmesserkleinere Abschnitt 40 des äußeren Kolbens 12 kann mit einem in der Figur nicht dargestellten Getriebeelement eines Doppelkupplungsgetriebes eines Kraftfahrzeugs zusammenwirken.

Ein erster Längsabschnitt 48 und ein zweiter Längsabschnitt 50 des inneren Kolbens 14 sind durch dessen radialen Vorsprung 46 miteinander verbunden, wobei der erste Längsabschnitt 48 in Bezug zum zweiten Längsabschnitt 50 eine deutlich größere Länge aufweist und analog zum durchmesserkleineren Abschnitt 40 des äußeren Kolbens 12 zur Betätigung eines in der Zeichnung nicht dargestellten Getriebeelements vorgesehen ist.

Der innere Zylinderabschnitt 20 und der mittlere Zylinderabschnitt 22 begrenzen zusammen mit einem planen sowie im Wesentlichen senkrecht zur Längsmittelachse 18 verlaufenden Basisabschnitt 52 des Zylindergehäuses 16 und dem inneren Kolben 14 einen ersten Druckraum 54. Zwischen dem Vorsprung 46 des inneren Kolbens 14 und dem Basisabschnitt 52 ist axial ein erstes Federelement 56 angeordnet, das hier lediglich exemplarisch als eine zylindrische, expandierbare Schraubenzugfeder ausgebildet ist.

Der durchmessergrößere Abschnitt 42 des äußeren Kolbens 12 ist koaxial von der schon erwähnten, hier beispielhaft dreifach gestuften Zylindermanschette 58 umgeben, deren erster Endabschnitt 60 fest mit dem Basisabschnitt 52 des Zylindergehäuses 16 verbunden ist. Ein von dem ersten Endabschnitt 60 axial weg gerichteter, freier zweiter Endabschnitt 62 der gestuften Zylindermanschette 58 ist mittels eines ersten und eines zweiten Dichtelements 64, 66 gegenüber einer zylindrischen Außenfläche 68 des durchmessergrößeren Abschnitts 42 des äußeren Kolbens 12 abgedichtet. Die beiden Dichtelemente 64, 66 sind zur bewegungsinvarianten Optimierung der Abdichtungswirkung spiegelbildlich zueinander ausgerichtet.

Darüber hinaus verfügt der durchmessergrößere Abschnitt 42 des äußeren Kolbens 12 über einen flanschartigen, radial auswärts gerichteten und im Wesentlichen senkrecht zur Längsmittelachse 18 verlaufenden Fußabschnitt 70, der mittels eines weiteren Dichtelements 72 gegenüber der gestuften Zylindermanschette 58 abgedichtet ist. Der durchmessergrößere Abschnitt 42 des äußeren Kolbens 12 ist ferner mittels eines ersten und eines zweiten vorzugsweise polymeren Führungselements 74, 76 aus einem reibungsarmen Kunststoff entlang des mittleren Zylinderabschnitts 22 axial verschiebbar geführt.

Zwischen dem Fußabschnitt 70 und dem durchmessergrößeren Abschnitt 42 des äußeren Kolbens 12 sowie der gestuften Zylindermanschette 58 besteht ein zweiter Druckraum 80 des Doppelaktors 10. Ferner ist zwischen einer ersten Schulter 82 der gestuften Zylindermanschette 58 und dem Fußabschnitt 70 des äußeren Kolbens 12 innerhalb des zweitens Druckraumes 80 ein zweites Federelement 84 angeordnet, das hier beispielhaft als eine zylindrische, expandierbare Schraubenzugfeder ausgebildet ist.

Eine zweite radial ausgerichtete Schulter 86 der gestuften Zylindermanschette 58 bildet einen axialen Anschlag für den Fußabschnitt 70 des äußeren Kolbens 12, wodurch zusammen mit dem Basisabschnitt 52 des Zylindergehäuses 16 ein größtmöglicher axialer Verfahrweg des äußeren Kolbens 12 definiert ist.

An einem freien Endabschnitt 90 des mittleren Zylinderabschnitts 22 ist darüber hinaus ein kreisscheibenförmiges Anschlagelement 92 an einer Schulter 94 des mittleren Zylinderabschnitts 22 mittels eines Sicherungselements 96 festgelegt. Bei dem Sicherungselement 96 kann es sich zum Beispiel um einen Sicherungsring, Federring oder dergleichen handeln. Infolgedessen ist ein maximaler axialer Verfahrweg des inneren Kolbens 14 durch das Anschlagelement 92 in Verbindung mit dem Basisabschnitt 52 des Zylindergehäuses 16 mechanisch definiert.

Der innere Kolben 14 ist durch zwei weitere, spiegelbildlich zueinander angeordnete Dichtelemente 98, 100 gegenüber dem inneren Zylinderabschnitt 20 des Zylindergehäuses 16 und mittels eines weiteren Dichtelements 102 gegenüber dem mittleren Zylinderabschnitt 22 abgedichtet. Der innere Kolben 14 ist mittels zwei vorzugsweise polymere Führungselemente 104, 106 aus einem reibungsarmen Kunststoff am inneren Zylinderabschnitt 20 sowie mittels eines mit dem mittleren Zylinderabschnitt 22 in Kontakt stehende Dichtelements 102, gegebenenfalls in Verbindung mit dem in dem Vorsprung 46 mittels eines weiteren Sicherungselements 108 fixierten zweiten Magneten M2, axial leichtgängig verschiebbar geführt.

In der lediglich beispielhaft dargestellten Stellung des inneren Kolbens 14 ist der erste Druckraum 54 mit einem nicht dargestellten und unter einem Druck von p stehenden Fluid beaufschlagt, so dass der radiale Vorsprung 46 des inneren Kolbens 12 entgegen der Kraftwirkung des axial auseinander gezogenen ersten Federelements 56 praktisch vollständig an dem Anschlagelement 92 anliegt. Wird hingegen der erste Druckraum 54 drucklos geschaltet, so zieht das erste Federelement 56 den inneren Kolben 14 axial soweit in das Zylindergehäuse 16 zurück, bis die Stirnseite des zweiten Längsabschnitts 50 des inneren Kolbens 14 im Idealfall vollständig an dem Basisabschnitt 52 des Zylindergehäuses 16 anliegt.

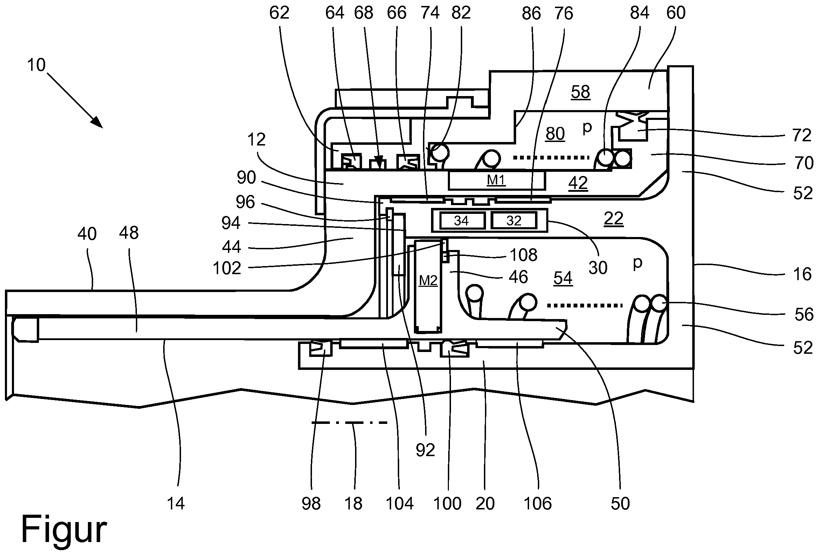

In der in Fig. 1 exemplarisch dargestellten Stellung des äußeren Kolbens 12 ist der zweite Druckraum 80 ebenfalls mit einem unter dem Druck p stehenden Fluid beaufschlagt, sodass sich der äußere Kolben 12 entgegen der Kraftwirkung des axial auseinander gezogenen zweiten Federelements 84 in seiner axial am weitesten in das Zylindergehäuse 16 zurückgezogenen Position befindet und der Fußabschnitt 70 im Idealfall unmittelbar an dem Basisabschnitt 52 des Zylindergehäuses 16 anliegt. Wird der zweite Druckraum 80 drucklos geschaltet, so zieht die zweite Druckfeder 84 den äußeren Kolben 12 axial wieder so weit aus dem Zylindergehäuse 16 heraus, bis dessen Fußabschnitt 70 an der zweiten Schulter 86 der Zylindermanschette 58 anliegt.

Durch individuelles Beaufschlagen der beiden Druckräume 54, 80 mit dem unter dem vorzugsweise gleichen Druck p stehenden Fluid oder durch entsprechendes Drucklosschalten der beiden Druckräume 54, 80 lassen sich die Kolben 12, 14 unabhängig voneinander bis zum Erreichen ihrer jeweiligen Anschlagposition axial verfahren. Als Fluide zum Betrieb des Doppelaktors 10 kommen in Abhängigkeit von den aufzubringenden Betätigungskräfte vor allem Druckluft, andere Gase oder Flüssigkeiten mit einer geeigneten Viskosität, wie zum Beispiel Schmieröle, Hydrauliköle oder Getriebeöle in Betracht.

Die beiden Wegsensoren 32, 34 sind vorzugsweise jeweils als so genannte PLCD-Sensoren (Permanentmagnetic Linear Contactless Displacement Sensoren) ausgebildet. Diese Sensortypen ermöglichen eine präzise, kontinuierliche und dabei wartungsfreie, da vollkommen berührungslose Erfassung der axialen Verfahrwege des äußeren und inneren Kolbens 12, 14 in einem Bereich von etwa 5 Millimetern bis mindestens 50 Millimetern. Derartige PLCD-Sensoren können auch unter widrigsten Umweltbedingungen dauerhaft und zuverlässig betrieben werden. Alternativ können die Wegsensoren 32, 34 auch durch magnetischen wirksamen Hall-Sensoren oder dergleichen realisiert sein.

### Bezugszeichenliste (Bestandteil der Beschreibung)

- 10: Doppelaktor
- 12: Radial äußerer Kolben
- 14: Radial innere Kolben
- 16: Zylindergehäuse
- 18: Längsmittelachse des Zylindergehäuses
- 20: Radial innerer Zylinderabschnitt
- 22: Radial mittlerer Zylinderabschnitt
- 30: Sensoreinrichtung
- 32: Erster Wegsensor der Sensoreinrichtung
- 34: Zweiter Wegsensor der Sensoreinrichtung
- 40: Durchmesserkleinerer Abschnitt des äußeren Kolbens
- 42: Durchmessergrößerer Abschnitt des äußeren Kolbens
- 44: Schulter
- 46: Vorsprung am innerer Kolben
- 48: Erster Längsabschnitt des inneren Kolbens
- 50: Zweiter Längsabschnitt des inneren Kolbens
- 52: Basisabschnitt des Zylindergehäuses
- 54: Erster Druckraum
- 56: Erstes Federelement
- 58: Gestufte Zylindermanschette
- 60: Erster Endabschnitt der Zylindermanschette
- 62: Freier zweiter Endabschnitt der Zylindermanschette
- 64: Erstes Dichtelement
- 66: Zweites Dichtelement
- 68: Außenfläche durchmessergrößeres Abschnitts des äußeren Kolbens
- 70: Fußabschnitt des äußeren Kolbens
- 72: Dichtelement
- 74: Führungselement
- 76: Führungselement
- 80: Zweiter Druckraum
- 82: Erste Schulter der Zylindermanschette
- 84: Zweites Federelement
- 86: Zweite Schulter der Zylindermanschette
- 90: Freier Endabschnitt des mittleren Zylinderabschnitts
- 92: Anschlagelement
- 94: Schulter
- 96: Sicherungselement
- 98: Dichtelement
- 100: Dichtelement
- 102: Dichtelement
- 104: Führungselement
- 106: Führungselement
- M1: Erster Magnet
- M2: Zweiter Magnet
- p: Druck

## Patentansprüche

1. Doppelaktor (10), beispielsweise für ein Doppelkupplungsgetriebe,
mit einem hohlzylindrischen radial äußeren Kolben (12) und einem hohlzylindrischen radial inneren Kolben (14),
bei dem der innere Kolben (14) abschnittsweise koaxial von dem äußeren Kolben (12) umschlossen ist,
bei dem der innere Kolben (14) und der äußere Kolben (12) in einem Zylindergehäuse (16) parallel zu dessen Längsmittelachse (18) axial verschiebbar geführt sind, und bei dem das Zylindergehäuse (16) einen radial inneren Zylinderabschnitt (20) sowie einen diesen koaxial umschließenden radial mittleren Zylinderabschnitt (22) aufweist,
**dadurch gekennzeichnet,**
**dass** an dem mittleren Zylinderabschnitt (22) des Zylindergehäuses (16) eine Sensoreinrichtung (30) angeordnet ist, in welcher ein erster Wegsensor (32) und ein zweiter Wegsensor (34) axial nebeneinander integriert sind,
und **dass** diese Wegsensoren (32, 34) derartig ausgebildet und angeordnet sind, dass eine Axialposition des äußeren Kolbens (12) sowie eine Axialposition des inneren Kolbens (14) in Bezug zu dem mittleren Zylinderabschnitt (22) jeweils unabhängig voneinander und berührungslos messbar sind.

2. Doppelaktor nach Anspruch 1, **dadurch gekennzeichnet,**
**dass** der äußere Kolben (12) einen durchmesserkleineren Abschnitt (40) und einen durchmessergrößeren Abschnitt (42) aufweist, wobei zwischen dem durchmesserkleineren Abschnitt (40) und dem durchmessergrößeren Abschnitt (42) eine radial auswärts gerichtete Schulter (44) ausgebildet ist.

3. Doppelaktor nach Anspruch 1 oder 2, **dadurch gekennzeichnet,**
**dass** an dem durchmessergrößeren Abschnitt (42) des äußeren Kolbens (12) ein erster Magnet (M1) angeordnet ist, der mit dem ersten Wegsensor (32) zusammenwirkt.

4. Doppelaktor nach einem der Ansprüche 1 bis 3, **dadurch gekennzeichnet,**
**dass** der innere Kolben (14) einen radial auswärts gerichteten, umlaufenden Vorsprung (46) aufweist, in dem ein zweiter Magnet (M2) angeordnet ist, der mit dem zweiten Wegsensor (34) zusammenwirkt.

5. Doppelaktor nach einem der vorherigen Ansprüche, **dadurch gekennzeichnet,**
**dass** wenigstens einer der Magneten (M1, M2) als Ringmagnet ausgebildet ist oder aus mehreren, ringförmig angeordneten Segmentmagneten besteht.

6. Doppelaktor nach einem der vorherigen Ansprüche, **dadurch gekennzeichnet,**
**dass** der innere Zylinderabschnitt (20) und der mittlere Zylinderabschnitt (22) zusammen mit einem Basisabschnitt (52) des Zylindergehäuses (16) und dem inneren Kolben (14) einen ersten Druckraum (54) begrenzen,
wobei axial zwischen dem radialen Vorsprung (46) des inneren Kolbens (14) und dem Basisabschnitt (52) des Zylindergehäuses (16) ein erstes Federelement (56) angeordnet ist.

7. Doppelaktor nach einem der vorherigen Ansprüche, **dadurch gekennzeichnet,**
**dass** der durchmessergrößere Abschnitt (42) des äußeren Kolbens (12) koaxial von einer radial gestuften Zylindermanschette (58) umfasst ist,
deren erster Endabschnitt (60) fest mit dem Basisabschnitt (52) des Zylindergehäuses (16) verbunden ist,
und dessen von dem ersten Endabschnitt (60) weggerichteter freier zweiter Endabschnitt (62) mit wenigstens einem Dichtelement (64, 66) gegenüber einer radialen Außenfläche (68) des durchmessergrößeren Abschnitts (42) des äußeren Kolbens (12) abgedichtet ist.

8. Doppelaktor nach Anspruch 7, **dadurch gekennzeichnet,**
**dass** der durchmessergrößere Abschnitt (42) des äußeren Kolbens (12) an seinem druckraumseitigen freien axialen Ende einen radial auswärts gerichteten Fußabschnitt (70) aufweist, der mittels mindestens eines Dichtelements (72) gegenüber der gestuften Zylindermanschette (58) abgedichtet ist,
und **dass** der durchmessergrößere Abschnitt (42) des äußeren Kolbens (12) mittels mindestens eines Führungselements (74, 76) an der radialen Außenseite des mittleren Zylinderabschnitts (22) axial verschiebbar geführt ist.

9. Doppelaktor nach Anspruch 8, **dadurch gekennzeichnet,**
**dass** zwischen dem Fußabschnitt (70) des äußeren Kolbens (12), dem durchmessergrößeren Abschnitt (42) des äußeren Kolbens (12) sowie der gestuften Zylindermanschette (58) ein zweiter Druckraum (80) ausgebildet ist.

10. Doppelaktor nach Anspruch 8 oder 9, **dadurch gekennzeichnet,**
**dass** axial zwischen einer ersten radialen Schulter (82) der gestuften Zylindermanschette (58) und dem Fußabschnitt (70) des äußeren Kolbens (12) ein zweites Federelement (84) angeordnet ist.

11. Doppelaktor nach einem der vorherigen Ansprüche, **dadurch gekennzeichnet,**
**dass** eine zweite radiale Schulter (86) der gestuften Zylindermanschette (58) einen axialen Anschlag für den Fußabschnitt (70) des äußeren Kolbens (12) bildet.

12. Doppelaktor nach einem der vorherigen Ansprüche, **dadurch gekennzeichnet,**
**dass** an einem freien axialen Endabschnitt (90) des radial mittleren Zylinderabschnitts (22) ein Anschlagelement (92) für den radialen Vorsprung (46) des inneren Kolbens (14) an einer Schulter (94) des radial mittleren Zylinderabschnitts (22) festgelegt ist.

13. Doppelaktor nach einem der vorherigen Ansprüche, **dadurch gekennzeichnet,**
**dass** beide Wegsensoren (32, 34) jeweils nach Art eines PLCD-Sensors ausgebildet sind.

## Claims

1. Double actuator (10), for example for a double clutch transmission,
with a hollow-cylindrical radially outer piston (12) and a hollow-cylindrical radially inner piston (14),
in the case of which double actuator (10) the inner piston (14) is enclosed in sections coaxially by the outer piston (12),
in the case of which double actuator (10) the inner piston (14) and the outer piston (12) are guided in a cylinder housing (16) such that it can be axially displaced parallel to the longitudinal centre axis (18) of the latter,
and in the case of which double actuator (10) the cylinder housing (16) has a radially inner cylinder section (20) and a radially central cylinder section (22) which encloses the former coaxially,
**characterized**
**in that** a sensor device (30) is arranged on the central cylinder section (22) of the cylinder housing (16), into which sensor device (30) a first displacement sensor (32) and a second displacement sensor (34) are integrated axially next to one another,
and **in that** the said displacement sensors (32, 34) are configured and arranged in such a way that an axial position of the outer piston (12) and an axial position of the inner piston (14) in relation to the central cylinder section (22) can be measured in each case independently of one another and contactlessly.

2. Double actuator according to Claim 1, **characterized**
**in that** the outer piston (12) has a section (40) of smaller diameter and a section (42) of greater diameter, a radially outwardly directed shoulder (44) being configured between the section (40) of smaller diameter and the section (42) of greater diameter.

3. Double actuator according to Claim 1 or 2,
**characterized**
**in that** a first magnet (M1) which interacts with the first displacement sensor (32) is arranged on the section (42) of greater diameter of the outer piston (12).

4. Double actuator according to one of Claims 1 to 3,
**characterized**
**in that** the inner piston (14) has a radially outwardly directed, circumferential projection (46), in which a second magnet (M2) is arranged which interacts with the second displacement sensor (34).

5. Double actuator according to one of the preceding claims, **characterized**
**in that** at least one of the magnets (M1, M2) is configured as a ring magnet or consists of a plurality of segment magnets which are arranged in an annular manner.

6. Double actuator according to one of the preceding claims, **characterized**
**in that**, together with a base section (52) of the cylinder housing (16) and the inner piston (14), the inner cylinder section (20) and the central cylinder section (22) delimit a first pressure space (54),
a first spring element (56) being arranged axially between the radial projection (46) of the inner piston (14) and the base section (52) of the cylinder housing (16) .

7. Double actuator according to one of the preceding claims, **characterized**
**in that** the section (42) of greater diameter of the outer piston (12) is surrounded coaxially by a radially stepped cylinder sleeve (58),
the first end section (60) of which is connected fixedly to the base section (52) of the cylinder housing (16), and the free second end section (62) of which, which is directed away from the first end section (60), is sealed by way of at least one sealing element (64, 66) with respect to a radial outer face (68) of the section (42) of greater diameter of the outer piston (12).

8. Double actuator according to Claim 7, **characterized**
**in that** the section (42) of greater diameter of the outer piston (12) has, at its pressure space-side free axial end, a radially outwardly directed foot section (70) which is sealed by means of at least one sealing element (72) with respect to the stepped cylinder sleeve (58), and in that the section (42) of greater diameter of the outer piston (12) is guided by means of at least one guide element (74, 76) such that it can be displaced axially on the radial outer side of the central cylinder section (22).

9. Double actuator according to Claim 8, **characterized**
**in that** a second pressure space (80) is configured between the foot section (70) of the outer piston (12), the section (42) of greater diameter of the outer piston (12), and the stepped cylinder sleeve (58).

10. Double actuator according to Claim 8 or 9, **characterized**
**in that** a second spring element (84) is arranged axially between a first radial shoulder (82) of the stepped cylinder sleeve (58) and the foot section (70) of the outer piston (12).

11. Double actuator according to one of the preceding claims, **characterized**
**in that** a second radial shoulder (86) of the stepped cylinder sleeve (58) forms an axial stop for the foot section (70) of the outer piston (12).

12. Double actuator according to one of the preceding claims, **characterized**
**in that**, on a free axial end section (90) of the radially central cylinder section (22), a stop element (92) for the radial projection (46) of the inner piston (14) is fixed on a shoulder (94) of the radially central cylinder section (22).

13. Double actuator according to one of the preceding claims, **characterized**
**in that** the two displacement sensors (32, 34) are configured in each case in the manner of a PLCD sensor.

## Revendications

1. Double actionneur (10), destiné par exemple à une transmission à double embrayage et comprenant un piston cylindrique creux radialement extérieur (12) et un piston cylindrique creux radialement intérieur (14),
le piston intérieur (14) étant enfermé par endroits coaxialement par le piston extérieur (12),
le piston intérieur (14) et le piston extérieur (12) étant guidés dans un boîtier de cylindre (16) de manière à pouvoir coulisser axialement parallèlement à son axe médian longitudinal (18), et
le boîtier de cylindre (16) comportant une portion de cylindre radialement intérieure (20) et une portion de cylindre radialement centrale (22) entourant celle-ci coaxialement,
**caractérisé en ce que**
un dispositif de détection (30), dans lequel un premier capteur de déplacement (32) et un deuxième capteur de déplacement (34) sont intégrés axialement l'un à côté de l'autre, est disposé sur la portion cylindrique centrale (22) du boîtier de cylindre (16) et
ces capteurs de déplacement (32, 34) sont conçus et disposés de telle manière qu'une position axiale du piston extérieur (12) et une position axiale du piston intérieur (14) par rapport à la portion de cylindre centrale (22) puissent chacune être mesurées indépendamment l'une de l'autre et sans contact.

2. Double actionneur selon la revendication 1,
**caractérisé en ce que**
le piston extérieur (12) comporte une portion (40) de plus petit diamètre et une portion (42) de plus grand diamètre, un épaulement (44) dirigé radialement vers l'extérieur étant formé entre la portion (40) de plus petit diamètre et la portion (42) de plus grand diamètre.

3. Double actionneur selon la revendication 1 ou 2,
**caractérisé en ce que**
sur la portion (42) de plus grand diamètre du piston extérieur (12) est disposé un premier aimant (M1) qui coopère avec le premier capteur de déplacement (32).

4. Double actionneur selon l'une des revendications 1 à 3, **caractérisé en ce que** le piston intérieur (14) comporte une saillie circonférentielle (46), dirigée radialement vers l'extérieur, dans laquelle est disposé un deuxième aimant (M2) qui coopère avec le deuxième capteur de déplacement (34).

5. Double actionneur selon l'une des revendications précédentes, **caractérisé en ce que** l'un au moins des aimants (M1, M2) est conçu sous la forme d'un aimant annulaire ou comprend une pluralité de segments d'aimant disposés annulairement.

6. Double actionneur selon l'une des revendications précédentes, **caractérisé en ce que** la portion de cylindre intérieure (20) et la portion de cylindre centrale (22), conjointement avec une portion de base (52) du boîtier de cylindre (16) et le piston intérieur (14), délimitent une première chambre de pression (54), un premier élément à ressort (56) étant disposé axialement entre la saillie radiale (46) du piston intérieur (14) et la portion de base (52) du boîtier de cylindre (16).

7. Double actionneur selon l'une des revendications précédentes, **caractérisé en ce que** la portion (42) de plus grand diamètre du piston extérieur (12) est entourée coaxialement par un manchon de cylindre (58) étagé radialement dont
la première portion d'extrémité (60) est reliée de manière fixe à la portion de base (52) du boîtier de cylindre (16) et
la deuxième portion d'extrémité libre (62) dirigée à l'opposé de la première portion d'extrémité (60) est rendue étanche à l'aide d'au moins un élément d'étanchéité (64, 66) par rapport à une surface extérieure radiale (68) de la portion (42) de plus grand diamètre du piston extérieur (12).

8. Double actionneur selon la revendication 7,
**caractérisé en ce que**
la portion (42) de plus grand diamètre du piston extérieur (12) comporte à son extrémité axiale libre du côté de la chambre de pression une portion de pied (70) dirigée radialement vers l'extérieur qui est rendue étanche par rapport au manchon de cylindre étagé (58) au moyen d'au moins un élément d'étanchéité (72),
et la portion (42) de plus grand diamètre du piston extérieur (12) est guidée de manière coulissante axialement au moyen d'au moins un élément de guidage (74, 76) sur le côté extérieur radial de la portion de cylindre centrale (22).

9. Double actionneur selon la revendication 8,
**caractérisé en ce que**
une deuxième chambre de pression (80) est formée entre la portion de pied (70) du piston extérieur (12), la portion (42) de plus grand diamètre du piston extérieur (12) et le manchon de cylindre étagé (58).

10. Double actionneur selon la revendication 8 ou 9,
**caractérisé en ce que**
un deuxième élément à ressort (84) est disposé axialement entre un premier épaulement radial (82) du manchon de cylindre étagé (58) et la portion de pied (70) du piston extérieur (12).

11. Double actionneur selon l'une des revendications précédentes, **caractérisé en ce qu'**un deuxième épaulement radial (86) du manchon de cylindre étagé (58) forme une butée axiale destinée à la portion de pied (70) du piston extérieur (12).

12. Double actionneur selon l'une des revendications précédentes, **caractérisé en ce qu'**un élément de butée (92) destiné à la saillie radiale (46) du piston intérieur (14) située au niveau d'un épaulement (94) de la portion de cylindre radialement centrale (22) est fixé sur une portion d'extrémité axiale libre (90) de la portion de cylindre radialement centrale (22).

13. Double actionneur selon l'une des revendications précédentes, **caractérisé en ce que** les deux capteurs de déplacement (32, 34) sont conçus chacun à la manière d'un capteur PLCD.
